# EUROPÄISCHE PATENTSCHRIFT

(11) **EP 2 300 537 B1**
(45) Veröffentlichungstag und Bekanntmachung des Hinweises auf die Patenterteilung: **05.06.2013**
(21) Anmeldenummer: 09780177.3
(22) Anmeldetag: 06.07.2009
(51) Int. Cl.: C08L 67/02, C08L 69/00, C08K 5/103, C08L 75/04, C08L 77/02

(54) **FLIESSVERBESSERTE THERMOPLASTEN**
THERMOPLASTICS HAVING IMPROVED FLOW
THERMOPLASTIQUES À ÉCOULEMENT AMÉLIORÉ

(30) Priorität: 09.07.2008 DE 102008032205
(43) Veröffentlichungstag der Anmeldung: 30.03.2011
(73) Patentinhaber: LANXESS Deutschland GmbH, 51369 Leverkusen (DE)
(72) Erfinder: JOACHIMI, Detlev, 47800 Krefeld (DE); BÜCHNER, Oliver, 40699 Erkrath (DE)
(86) Internationale Anmeldenummer: PCT/EP2009/058491
(87) Internationale Veröffentlichungsnummer: WO 2010/003914

(56) Entgegenhaltungen:
- EP-A1- 0 237 843
- EP-A1- 0 394 778
- EP-A2- 0 376 289
- WO-A1-88/02383
- WO-A1-98/11164
- WO-A1-2006/120184
- DE-A1- 1 694 625

## Beschreibung

Die vorliegende Erfindung betrifft die Verwendung von Polyalkylenglykolestern (PAGE) mit niedrigem Molekulargewicht der allgemeinen Formel (I)

R-COO-(Z-O)ₙOC-R (I)

worin
- R: für eine verzweigte oder geradkettige Alkylgruppe mit 1 bis 20 Kohlenstoffatomen steht,
- Z: für eine verzweigte oder geradkettige C₂ bis C₁₅ Alkylengruppe steht und
- n: für eine ganze Zahl von 2 bis 20 steht
als Fließverbesserer in thermoplastischen Formmassen auf Basis von Polyamiden.

WO 2006/120184 A1 beschreibt Zusammensetzungen enthaltend 40 bis 90 Gew.-Teile eines thermoplastischen Polyesters sowie 0,01 bis 10 Gew.-Teile eines Polyalkylenglykolesters der zur Verbesserung der Fließeigenschaften dient.

EP 0 237 843 A1 beschreibt Zusammensetzungen aus 100 Gew.-Teilen Polyethylenterephthalat und 1 bis 15 Gew.-Teilen eines Polyalkylenglykolesters. Der Ester wird zugesetzt, um die Verarbeitungseigenschaften der Formzusammensetzungen bei niedrigen Temperaturen zu verbessern. EP 0 237 843 A1 lehrt zudem die Verwendung dieser Formmassen in der Dünnwandtechnologie.

DE 1 694 625 A1 lehrt eine Zusammensetzung aus einem thermoplastischen Polyester, dem 1 bis 15 Gew-% eines Polyalkylenglykolesters zugesetzt ist.

EP 0376 289 A2 beschreibt Zusammensetzungen aus thermoplastischen Polycarbonaten, die 0,1 bis 5 Gew-% eines Polyalkylenglykolesters enthalten.

EP 0 394 778 A1 beschreibt Zusammensetzungen aus thermoplastischen Polycarbonaten, die 0,05 bis 5 Gew.% eines Polyalkylenglykolesters aufweisen.

WO 88/02383 A1 beschreibt thermoplastische Polyurethanschäume, die geringe Mengen eines Polyalkylenglykolesters aufweisen.

WO 98/11164 A lehrt den Einsatz der PAGE gemäß Formel (I), worin Z für eine Ethylengruppe (-CH₂-CH₂-) steht, in Polyamiden als weichmachende Verbindung, wobei zu 99,9-30 Gew.-% einer Polyamid enthaltenden Verbindung 0,1 -20 Gew.% PAGE der Formel (I), worin Z für eine Ethylengruppe (-CH₂-CH₂-) steht, zugegeben werden. Ziel der WO 98/11164 A ist die Verbesserung der Schweißnahtfestigkeit aus derartigen Formmassen hergestellter Bauteile die man durch Zusammenschweißen gesonderter Teile erhält. Insbesondere der Berstdruck einer Pressnaht eines Hohlkörpers, hergestellt aus zwei Halbschalen, soll durch den Einsatz von PAGE der Formel (I), worin Z für eine Ethylengruppe steht, verbessert werden.

Hochfließfähige thermoplastische Zusammensetzungen sind für eine Vielzahl von Spritzgussanwendungen interessant. Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrücken bzw. Schließkräften der entsprechenden Spritzgießmaschinen möglich ist. Dies trifft auch auf das gleichzeitige Füllen von mehreren Spritzgussbauteilen über ein gemeinsames Angusssystem in so genannten Vielfachwerkzeugen zu. Des Weiteren können häufig mit niederviskosen thermoplastischen Zusammensetzungen auch kürzere Zykluszeiten realisiert werden. Darüber hinaus sind gute Fließfähigkeiten gerade auch bei hochgefüllten thermoplastischen Zusammensetzungen beispielsweise mit Glasfaser- und/oder Mineralgehalten von über 40 Gew.% sehr wichtig.

Trotz hoher Fließfähigkeit der thermoplastischen Zusammensetzungen werden jedoch hohe mechanische Anforderungen an die daraus herzustellenden Bauteile selber gestellt, so dass durch die Viskositätserniedrigung keine Beeinträchtigung der mechanischen Eigenschaften verursacht werden darf.

Es gibt mehrere Möglichkeiten hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit, verbunden. Außerdem erfordert die Herstellung eines niederviskosen Polymerharzes auf einer bestehenden Polymerisationsanlage oftmals aufwändige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind aus der Literatur wie z.B. aus Kunststoffe 2000, 9, S. 116-118 bekannt und können beispielsweise Fettsäureester von Polyolen oder Amide aus Fettsäuren oder Aminen sein. Derartige Fettsäureester, wie beispielsweise Pentaerythritoltetrastearat oder Ethylenglykoldimontanoat, sind jedoch mit polaren Thermoplasten wie Polyamiden, Polyalkylenterephthalaten oder Polycarbonaten nur begrenzt mischbar. Sie sind besonders an der Grenzfläche zwischen Polymer und Metall aktiv und werden deshalb auch als Entformungshilfsmittel eingesetzt. Sie können allerdings besonders bei höheren Konzentrationen bei Wärmelagerung oder im Falle von Polyamiden auch bei der Feuchteaufnahme aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu den oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind aus der Literatur bekannt und können beispielsweise auf verzweigten Polyestern, Polyamiden, Polyesteramiden, Polyether oder Polyaminen basieren, wie sie in Kunststoffe 2001, 10, S. 178-190, oder in Advances in Polymer Science 1999, 143 (Branched Polymers II), S. 1-34 beschrieben sind.

EP-A 0 682 057 beschreibt den Einsatz des stickstoffhaltigen 4-Kaskadendendrimers der ersten Generation: 1,4-Diaominobutan[4]propylamin (N,N'-tetrabis(3-aminopropyl)-1,4-butandiamin) DAB(PA)₄ zur Erniedrigung der Viskosität in Polyamid 6, Polyamid 6,6 und Polybutylenterephthalat (PBT). Während beim Einsatz von DAB(PA)₄ zur Viskositätserniedrigung und der damit verbundenen Erhöhung der Fließfähigkeit in Polyamiden die Schlagzähigkeit der erhaltenen Formmassen praktisch unbeeinflusst bleibt (Unterschied < 5%), nimmt die Schlagzähigkeit bei PBT um mehr als 15% ab.

WO-A 95/06081 (= US 5 493 000) A1 beschreibt den Einsatz von dreidimensionalen verzweigten Polymeren mit starren aromatischen Einheiten in Blends mit Polyamid zur Erhöhung der Materialsteifigkeit und der Reißfestigkeit bei gleichzeitiger Reduktion der Viskosität, was zu einer Erhöhung der Fließfähigkeit und der Reißdehnung der Blends führt.

EP-A 0 994 157 (= AU 6 233 499 A) beschreibt den Einsatz von hochverzweigten, auf Aromaten basierenden Polymeren, die bei der Caprolactam-Polykondensation zugesetzt und damit einpolymerisiert werden. Dabei zeigen Zusammensetzungen aus Polyamiden, bei denen hochverzweigte Polymere einpolymerisiert wurden, bessere mechanische Eigenschaften und bessere Fließfähigkeiten, als Vergleichszusammensetzungen ohne die hochverzweigten Komponenten. Beschrieben wird die Zugabe der hochverzweigten Polymere während der Polymerisation, nicht aber die Zugabe zu einer Polymerschmelze.

Grundsätzlich lassen sich Verbesserungen der Fließfähigkeit von Polyamiden auch durch Zusatz von Phenolen, Bisphenolen und ähnlichen niedermolekularen Additiven erzielen. EP-A 0 240 887 (= US 5 212 224) beschreibt Formmassen aus Polyamid, einem Kautschuk und einem Bisphenol, die eine durch das Additiv hervorgerufene verbesserte Fließfähigkeit aufzeigen.

In DE-A 32 48 329 (= US 4 628 069) wird der Zusatz von phenolischen Verbindungen zu Polyamid zur Verringerung der Wasseraufnahme beschrieben.

Neben der Verbesserung der Fließfähigkeit ist es oft erwünscht die Zähigkeit der Materialien zu verbessern. Dazu können den eingesetzten Thermoplasten zusätzlich weitere Copolymere auf Basis von Ethen und Acrylsäure- oder Methacrylsäureestern zugesetzt werden, die eine Verbesserung der Zähigkeit bewirken.

DE-A 2 758 568 (= US 4 362 846) und DE-A 2 801 585 (= US 4 362 846) beschreiben die Zähmodifizierung von Polyamiden mit Acrylat-gepfropften Polyolefinen. Es wird betont, dass die Verwendung der Acrylat-modifizierten Polyolefine zu einer Erhöhung der Schmelzeviskosität und damit zu einer Reduktion der Fließfähigkeit führt.

EP-A 1 191 067 (= US 6 759 480) beschreibt die Zähmodifizierung von Thermoplasten, unter anderem von Polyamid und Polybutylenterephthalat durch eine Mischung aus einem Copolymerisat aus Ethen mit einem nichtreaktiven Alkylacrylat sowie einem Copolymerisat aus Ethen mit einem Acrylat mit zusätzlicher reaktiver Gruppe. Die Fließfähigkeit der Formmassen wird nicht diskutiert.

Die Aufgabe der vorliegenden Erfindung bestand nun darin, eine Erniedrigung der Viskosität und eine damit verbundene Erhöhung der Fließfähigkeit thermoplastischer Polykondensatzusammensetzungen durch Additivierung der Polymerschmelze zu erreichen, ohne dabei Verluste bei Eigenschaften wie Schlagzähigkeit und Hydrolysebeständigkeit in Kauf nehmen zu müssen, wie dies beim Einsatz niederviskoser linearer Polymerharze oder bei literaturbekannten Additiven auftritt. Bezüglich Steifigkeit und Reißfestigkeit sollten sich die Zusammensetzungen, basierend auf Thermoplasten möglichst nicht signifikant von den nicht additivierten Polykondensatzusammensetzungen unterscheiden, damit ein problemloser Austausch der Materialien für Kunststoffkonstruktionen auf Basis von thermoplastischen Polymeren ermöglicht wird. Im Gegensatz zur oben beschriebenen WO 98/11164 A bestand die Aufgabe der vorliegenden Erfindung also darin, nicht die Schweißnahtfestigkeit Polyamid-basierter Formteile zu verbessern, sondern die Fließfähigkeit thermoplastischer Formmassen allgemein zu verbessern.

Die Lösung der Aufgabe und somit Gegenstand der Erfindung ist die Verwendung von Polyalkylenglykolestern mit niedrigem Molekulargewicht der allgemeinen Formel (I)

R-COO-(Z-O)ₙOC-R (I)

worin
- R: für einen verzweigten oder geradkettigen C₁-C₂₀-Alkylrest steht,
- Z: für eine verzweigte oder geradkettige C₂ bis C₁₅ Alkylengruppe steht und
- n: für eine ganze Zahl von 2 bis 20 steht
als Fließverbesserer in thermoplastischen Formmassen auf Basis von Polyamiden.

Überraschend wurde gefunden, dass Mischungen aus mindestens einem teilkristallinen thermoplastischen Polymer mit einem Polyalkylenglykolester der Formel (I) zur gewünschten Erniedrigung der Schmelzviskosität der daraus hergestellten erfindungsgemäßen Formmassen auf Basis von Polyamiden führen. Im Vergleich zu reinen thermoplastischen Polykondensaten auf Basis von Polyamiden gleicher Fließfähigkeit zeichnen sich die aus den erfindungsgemäßen Polykondensat-Formmassen hergestellten Formteile durch eine höhere Schlagzähigkeit aus. Die Formmassen sind zum Einsatz in der Dünnwandtechnologie hervorragend geeignet.

Erfindungsgemäß in ihrer Fließfähigkeit zu verbessernde Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) zu Werkstoffen mit speziell eingestellten Eigenschaftskombinationen ausgerüstet werden. Geeignet sind auch Blends mit Anteilen von anderen Polymeren, z.B. von Polyethylen, Polypropylen, ABS (AcrylnitrilButadien-Styrol-Copolymer), wobei gegebenenfalls ein oder mehrere Kompatibilisatoren eingesetzt werden können. Die Eigenschaften der Polyamide lassen sich durch Zusatz von Elastomeren verbessern, z.B. im Hinblick auf die Schlagzähigkeit von z.B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Erfindungsgemäß bevorzugt in ihrer Fließfähigkeit zu verbessernde Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen. Erfindungsgemäß besonders bevorzugt in ihrer Fließfähigkeit zu verbessernde Polyamide sind auf Basis von Caprolactam, ganz besonders bevorzugt ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen.

Die erfindungsgemäß in ihrer Fließfähigkeit zu verbessernden teilkristallinen Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel in der Schmelze zugemischt oder auf der Oberfläche aufgebracht werden.

Bevorzugte Fließverbesserer der Formel (I) sind Polyalkylenglykolester, worin
- R: für eine verzweigte oder geradkettige C₁-C₁₅-Alkylgruppe steht,
- Z: für eine verzweigte oder geradkettige C₂-C₁₅ Alkylengruppe steht und
- n: für eine ganze Zahl von 2 bis 20 steht.

Besonders bevorzugte Fließverbesserer der Formel (I) sind Polyalkylenglykolester, worin
- R: für eine verzweigte oder geradkettige C₁-C₁₅-Alkylgruppe steht,
- Z: für eine Ethylengruppe (-CH₂-CH₂-) steht und
- n: für eine ganze Zahl von 2 bis 20 steht.

Insbesondere bevorzugte Fließverbesserer der Formel (I) sind Polyalkylenglykolester, worin
- R: für eine verzweigte oder geradkettige C₁-C₁₅-Alkylgruppe steht,
- Z: für eine Ethylengruppe (-CH₂-CH₂-) steht und
- n: für eine ganze Zahl von 2 bis 9 steht.

Insbesondere besonders bevorzugte Fließverbesserer der Formel (I) sind Polyalkylenglykolester, worin
- R: für eine verzweigte C₃-C₁₅-Alkylgruppe steht,
- Z: für eine Ethylengruppe (-CH₂-CH₂-) steht und
- n: für eine ganze Zahl von 2 bis 9 steht.

Erfindungsgemäß ganz besonders bevorzugt steht R für CH(C₂H₅)(C₄H₉), Z für eine Ethylengruppe (-CH₂-CH₂-) und n für eine ganze Zahl von 2 bis 9.

Erfindungsgemäß insbesondere ganz besonders bevorzugt wird die Verbindung Triethylenglykol-di-2-ethylhexanoat (TEG-EH) eingesetzt (CAS:94-28-0).

Während vom thermoplastischen Polyamid, bevorzugt 99,9-85 Gew.-Teile eingesetzt werden, wird der Fließverbesserer bevorzugt zu mehr als 0,1 Gew.-Teile, besonders bevorzugt zu 3 bis 15 Gew.-Teile, ganz besonders bevorzugt zu 4 bis 10 Gew.-Teile, insbesondere zu 5,1 bis 8 Gew.-Teile eingesetzt.

Zur Klarstellung sei angemerkt, dass vom Rahmen der Erfindung alle aufgeführten, allgemein oder in Vorzugsbereichen genannten Definitionen und Parameter in beliebigen Kombinationen umfasst sind.

In einer bevorzugten Ausführungsform können die in ihrer Fließfähigkeit zu verbessernden Formmassen auf Basis von Polyamiden zusätzlich zu den Komponenten A) Thermoplast und B) Fließverbesserer eine oder mehrere der Komponenten der Reihe C) Füll- oder Verstärkungsstoffe, D) Flammschutzadditiv, E) Elastomermodifikator, F) übliche Additive oder G) Verträglichkeitsvermittler enthalten.

In einer solchen bevorzugten Ausführungsform können also zusätzlich zu den Komponenten A) und B) noch gegebenenfalls
C) 0,001 bis 70 Gew.-Teile, vorzugsweise 5 bis 50 Gew.-Teile, besonders bevorzugt 9 bis 47 Gew.-Teile mindestens eines Füll- oder Verstärkungsstoffes in den thermoplastischen Polyamid-Formmassen enthalten sein.

Als Füllstoff oder Verstärkungsstoff können aber auch Mischungen aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern eingesetzt werden. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Besonders bevorzugt werden mineralische teilchenförmige Füllstoffe auf der Basis von Talk, Wollastonit, Kaolin und/oder Glasfasern eingesetzt.

Insbesondere für Anwendungen, in denen Isotropie bei der Dimensionsstabilität und eine hohe thermische Dimensionsstabilität gefordert wird, wie beispielsweise in Kraftfahrzeug-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge: Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem z.B. auf Silanbasis ausgerüstet sein.

Gebräuchliche Haftvermittler auf Silanbasis für die Vorbehandlung sind Silanverbindungen beispielsweise der allgemeine Formel (II)

(X-(CH₂)_{q})ₖ-Si-(O-CᵣH₂ᵣ₊₁)₄₋ₖ (II)

in der die Substituenten folgende Bedeutung haben:
- X: für NH₂-, HO- oder 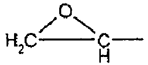
steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer alternativen bevorzugten Ausführungsform können die Polyamid-Formmassen zusätzlich zu den Komponenten A), B) und C) oder anstelle von C) noch
D) 0,001 bis 65 Gew.-Teile mindestens eines Flammschutzadditivs enthalten.

Als Flammschutzmittel der Komponente D) können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122(= CA 210 9024 A1)) können eingesetzt werden. Ebenso kommen Salze aliphatischer oder aromatischer Sulfonsäuren in Frage. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol und Decabrom-diphenylether. Als organische Phosphorverbindungen sind die Phosphorverbindungen gemäß WO-A 98/17720 (= US 6 538 024) geeignet, besonders bevorzugt Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische oder anorganische Phosphonsäurederivate und deren Salze, organische oder anorganische Phosphinsäurederivate und deren Salze, insbesondere Metalldialkylphosphinate, insbesondere ganz besonders bevorzugt Aluminium-tris[dialkylphosphinate] oder Zink-bis[dialkylphosphinate], außerdem roter Phospshor, Phosphite, Hypophosphite, Phospinoxide, Phosphazene, Melaminpyrophosphat und deren Mischungen. Als Stockstoffverbindungen kommen solche aus der Gruppe der Allantoin-, Cyanursäsure-, Dicyandiamid, Glycouril-, Guanidin-, Ammonium- und Melaminderivate, bevorzugt Allantoin, Benzoguanamin, Glykouril, Melamin, Kondensationsprodukte des Melamins z.B. Melem oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) in Frage. Als Synergisten sind z.B. Antimonverbindungen, insbesondere Antimontrioxid, Natriumantimonat und Antimonpentoxid, Zinkverbindungen wie z.B. Zinkborat, Zinkoxid, Zinkphosphat und Zinksulfid, Zinnverbindungen wie z.B. Zinnstannat oder Zinnborat sowie Magnesiumverbindungen wie z.B. Magnesiumoxid, Magnesiumcarbonat oder Magnesiumborat geeignet. Auch können dem Flammschutzmittel sogenannte Kohlenstoffbildner wie z.B. Phenol-Formaldehydharze, Polycarbonate, Polyphenylether, Polyimide, Polysulfone, Polyethersulfone, Polyphenylosulfide oder Polyetherketone sowie Antitropfmittel wie Tetrafluorethylenpolymerisate zugesetzt werden.

In einer weiteren alternativen bevorzugten Ausführungsform können die Polyamid-Formmassen zusätzlich zu den Komponenten A), B), C) und/oder D) und/oder anstelle von C) und/oder D) noch
- E): 0,001 bis 80 Gew.-Teile, besonders bevorzugt 2 bis 25 Gew.-Teile mindestens eines Elastomermodifikators enthalten.

Die als Komponente E) einzusetzenden Elastomermodifikatoren umfassen ein oder mehrere Pfropfpolymerisate von
- E.1: 5 bis 95 Gew.-%, vorzugsweise 30 bis 90 Gew.-%, wenigstens eines Vinylmonomeren auf
- E.2: 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere E.1 sind vorzugsweise Gemische aus
- E.1.1: 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- E.1.2: 1 bis 50 Gew.% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol oder Methylmethacrylat, bevorzuge Monomere E.1.2 sind ausgewählt aus mindestens einem der Monomere Acrylnitril, Maleinsäureanhydrid oder Methylmethacrylat.

Besonders bevorzugte Monomere sind E.1.1 Styrol und E.1.2 Acrylnitril.

Für die in den Elastomermodifikatoren E) einzusetzenden Pfropfpolymerisate geeignete Pfropfgrundlagen E.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugte Propfgrundlagen E.2 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280-295 beschrieben sind. Der Gelanteil der Pfropfgrundlage E.2 beträgt mindestens 30 Gew.-%, vorzugsweise mindestens 40 Ges.-% (in Toluol gemessen).

Die Elastomermodifikatoren bzw. Pfropfpolymerisate E) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten E auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen E2, die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropgrundlagen gemäß E.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren als Komponente E) eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

In einer weiteren alternativen bevorzugten Ausführungsform können die Polyamid-Formmassen zusätzlich zu den Komponenten A), B), C) und/oder D) und/oder E oder anstelle von C) und/oder D) und/oder E) noch
F) 0,001 bis 10 Gew.-Teile, bevorzugt 0.05 bis 3 Gew.-Teile weitere übliche Additive enthalten.

Übliche Additive im Sinne der vorliegenden Erfindung sind bevorzugt Stabilisatoren (zum Beispiel UV-Stabilisatoren, Thermostabilisatoren, Gammastrahlenstabilisatoren), Antistatika, Fließhilfsmittel, Entformungsmittel, Brandschutzadditive, Emulgatoren, Nukleierungsmittel, Weichmacher, Gleitmittel, Farbstoffe und Pigmente und Additive zur Erhöhung der elektrischen Leitfähigkeiten. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können bevorzugt sterisch gehinderte Phenole, Hydrochinone, aromatische sekundäre Amine wie Diphenylamine, substituierte Resorcine, Salicylate, Benzotriazole oder Benzophenone, sowie verschieden substituierte Vertreter dieser Gruppen und deren Mischungen eingesetzt werden.

Als Pigmente bzw. Farbstoffe können bevorzugt Titandioxid, Ultramarinblau, Eisenoxid, Ruß, Phthalocyanine, Chinacridone, Perylene, Nigrosin und Anthrachinone eingesetzt werden.

Als Nukleierungsmittel können bevorzugt Natrium- oder Calciumphenylphosphinat, Aluminiumoxid, Siliziumdioxid sowie bevorzugt Talkum eingesetzt werden.

Als Gleit- und Entformungsmittel können bevorzugt Esterwachse, Pentaerytritoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können bevorzugt Phthalsäuredioctylester, Phthalsäuredibenzylester, Phthalsäurebutylbenzylester, Kohlenwasserstofföle, N-(n-Butyl)benzolsulfonamid eingesetzt werden.

Als Additive zur Erhöhung der elektrischen Leitfähigkeit können bevorzugt Ruße, Leitfähigkeitsruße, Carbonfibrillen, nanoskalige Grafit- und Kohlenstofffasern, Graphit, leitfähige Polymere, Metallfasern sowie andere übliche Additive zur Erhöhung der elektrischen Leitfähigkeit zugesetzt werden. Als nanoskalige Fasern können bevorzugt sogenannte "single wall Kohlenstoff-Nanotubes" oder "multi wall Kohlenstoff-Nanotubes" (z.B. der Firma Hyperion Catalysis) eingesetzt werden.

In einer weiteren alternativen bevorzugten Ausführungsform können die Polyamid-Formmassen zusätzlich zu den Komponenten A) und B), und/oder C), und/oder D), und/oder E), und/oder F) noch gegebenenfalls
G) 0,5 bis 30 Gew.-Teile, bevorzugt 1 bis 20 Gew.-Teile, besonders bevorzugt 2 bis 10 Gew.-Teile und höchst bevorzugt 3 bis 7 Gew.-Teile Verträglichkeitsvermittler (Compatibilizer / Kompatibilisator) enthalten.

Als Verträglichkeitsvermittler werden vorzugsweise thermoplastische Polymere mit polaren Gruppen eingesetzt.

Erfindungsgemäß kommen demgemäß Polymere zum Einsatz, die
G.1 ein vinylaromatisches Monomer,
G.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
G.3 α,β-ungesättigte Komponenten enthaltend Dicarbonsäureanhydride enthalten.

Vorzugsweise werden als Komponente G.1, G.2 und G.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer kann nach bekannter Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, bevorzugt Methylethylketon (MEK). Zu dieser Lösung werden ein oder gegebenenfalls mehrere chemische Initiatoren hinzugesetzt. Bevorzugt geeignete Initiatoren sind Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente G.1 (vinylaromatisches Monomer) und der Komponente G.2, z.B. dem Acrylnitrilmonomer in dem Terpolymer liegt vorzugsweise zwischen 80:20 und 50:50.

Als vinylaromatisches Monomer G.1 ist Styrol besonders bevorzugt.

Für die Komponente G.2 ist besonders bevorzugt Acrylnitril geeignet.

Als Komponente G.3 ist besonders bevorzugt Maleinsäureanhydrid geeignet.

Beispiele für erfindungsgemäß einsetzbare Verträglichkeitsvermittler G) sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können in Komponente G) allein oder in beliebiger Mischung untereinander enthalten sein.

Eine weitere, als Verträglichkeitsvermittler besonders bevorzugte Substanz ist ein Terpolymer von Styrol und Acrylnitril im Gewichtsverhältnis 2,1:1 enthaltend 1 Mol-% Maleinsäureanhydrid.

Komponente G) wird insbesondere dann eingesetzt, wenn die Formmasse Pfropfpolymerisate, wie unter E) beschrieben, enthält.

Erfindungsgemäß ergeben sich folgende bevorzugte Kombinationen der Komponenten:
A,B; A,B,C; A,B,D; A,B,E; A,B,F; A,B,G; A,B,C,D; A,B,C,E; A,B,C,F; A,B,C,G; A,B,D,E; A,B,D,F; A,B,D,G; A,B,E,F; A,B,E,G; A,B,F,G; A,B,C,D,E; A,B,C,D,F; A,B,C,D,G; A,B,C,E,F; A,B,C,E,G; A,B,C,F,G; A,B,E,F,G; A,B,D,E,F; A,B,D,E,G; A,B,D,F,G; A,B,C,D,E,F; A,B,C,D,E,G; A,B,C,D,F,G; A,B,D,E,F,G; A,B,C,E,F,G; A,B,C,D,E,F,G.

Die erfindungsgemäß in ihrer Fließeigenschaft zu verbessernden Polyamid-basierten Formmassen erhält man nach bekannten Verfahren durch Vermischen der oben aufgeführten Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Die aus den fließverbesserten Polyamid-Formmassen hergestellten Formteile, Formkörper oder Halbzeuge zeichnen sich durch eine höhere Schlagzähigkeit aus als Formteile, Formkörper oder Halbzeuge aus Formmassen vergleichbarer Schmelzviskosität, die durch Einsatz eines niedrigerviskosen Basisharzes als Komponente A) hergestellt wurden. Dabei ist vielfach auch die Reißdehnung der aus den erfindungsgemäß verbesserten Formmassen hergestellten Formteile, Formkörper bzw. Halbzeuge im Vergleich zu Formteilen, Formkörpern bzw. Halbzeugen aus Formmassen auf Basis eines niedrigerviskosen Basisharzes höher, wobei der Zugmodul bei den aus fließverbesserten Formmassen hergestellten Formteilen nur geringfügig reduziert wird und somit eine Materialsubstitution möglich ist.

Die fließverbesserten Formmassen zeigen im Vergleich zu gleichviskosen Formmassen auf Basis niedrigerviskoser Basisharze zusätzlich weiterhin häufig folgende Vorteile:
- geringere Dichte
- isotroperes Schwindungsverhalten, das zu geringerem Verzug der Formteile führt
- reduziertes Schwindungsverhalten, das zu geringerem Verzug der Formteile führt
- verbesserte Hydrolysebeständigkeit
- verbesserte Oberflächenqualität der Formteile.

Die fließverbesserten Formmassen zeigen im Vergleich zu gleichviskosen Formmassen auf Basis niedrigerviskoser Basisharze eine verbesserte Fließfähigkeit, insbesondere bei für die Spritzgießverarbeitung relevanten Scherraten. Dies zeigt sich u.a. auch an reduzierten Fülldrücken.

Die fließverbesserten Formmassen können nach üblichen Verfahren, bevorzugt durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Die aus den fließverbesserten Formmassen herzustellenden Formteile, Formkörper oder Halbzeuge können klein- oder großteilig sein und beispielsweise in der Kraftfahrzeug-, Elektro-, Elektronik-, Telekommunikations-, Informationstechnologie-, Computerindustrie, im Haushalt, Sport, in der Medizin oder der Unterhaltungsindustrie angewandt werden. Insbesondere können die erfindungsgemäß fließverbesserten Polyamid-Formmassen für Anwendungen eingesetzt werden, für die eine hohe Schmelzefließfähigkeit erforderlich ist. Ein Beispiel für derartige Anwendungen ist die so genannte Dünnwandtechnologie, bei der die aus den Formmassen herzustellenden Formteile Wanddicken von weniger als 2,5 mm, bevorzugt weniger als 2,0 mm, besonders bevorzugt weniger als 1,5 mm und am meisten bevorzugt weniger als 1,0 mm aufweisen. Ein weiteres Beispiel für derartige Anwendungen ist die Zykluszeitverkürzung z.B. durch Absenkung der Verarbeitungstemperatur. Ein weiteres Anwendungsbeispiel ist die Verarbeitung der Formmassen über so genannte Multiwerkzeuge, bei denen über ein Angusssystem mindestens 4 Formen, bevorzugt mindestens 8 Formen, besonders bevorzugt mindestens 12 Formen, am meisten bevorzugt mindestens 16 Formen in einem Spritzgussvorgang gefüllt werden.

Ferner können Formteile aus den fließverbesserten Formmassen für Teile des Kühlkreislaufs und/oder des Ölkreislaufs von Kraftfahrzeugen eingesetzt werden.

### Beispiele

### Komponenten für Beispiele auf Basis PA6;

**Komponente A1:** Lineares Polyamid 6 mit einer relativen Lösungsviskosität von 2,4 (gemessen in m-Kresol bei 25°C)
**Komponente B1:** Triethylenglycol-bis(2-ethylhexanoat) (TEG-EH) TEG-EH-Plasticizer der Eastman Chemical B.V., Den Haag, Niederlande
**Komponente C1:** Mit silanhaltigen Verbindungen beschlichtete Glasfaser mit einem Durchmesser von 11 µm (CS 7928, Handelsprodukt der Lanxess Antwerpen N.V., Antwerpen, Belgien)
**Komponente F1:** Als weitere Additive wurden die folgenden, für die Verwendung in thermoplastischen Polyamiden gebräuchlichen Komponenten eingesetzt:
Kautschuk: Paraloid^{®} EXL-3300 von Rohm & Haas Deutschland GmbH in Mengen von 0,5 bis 3 Gew.-%.
Nukleierungsmittel: Talkum [CAS-Nr. 14807-96-6] in Mengen von 0,01 bis 1 Gew.%.
Ruß: Plasblak^{®}UN2014 von Cabot Plastics Deutschland von 0,01 bis 1 Gew.-%.
Entformungsmittel: Ethylenglykoldimontanat [CAS-Nr. 74388-22-0], in Mengen von 0,02 bis 2 Gew.-%.

Die verwendeten weiteren Additive (Komponente F) stimmen in Art und Menge jeweils für die Beispiele und Vergleiche überein.

Zusammensetzungen auf Basis von PA6 der Beispiele in der Tabelle 1 wurden auf einem Zweiwellenextruder des Typs ZSK32 (Werner und Pfleiderer) bei Massetemperaturen von 260 bis 300°C zu Formmassen compoundiert, die Schmelze wurde in ein Wasserbad ausgetragen und anschließend granuliert.

Die Prüfkörper der Zusammensetzungen der Beispiele in Tabelle 1 wurden auf einer Spritzgießmaschine des Typs Arburg 320-210-500 bei Massetemperaturen von ca. 270°C und einer Werkzeugtemperatur von ca. 80°C zu Schulterstäben (4 mm Dicke gemäß ISO 527), Prüfstäben 80x10x4 mm (gem. ISO 178) verspritzt.

Bis auf die Schmelzeviskositätsmessung und die Bestimmung der Fließspirallänge wurden alle in Tabelle 1 aufgeführten Untersuchungen an o.g. Prüfkörpern durchgeführt:
Zugversuch zur Ermittlung von Zugmodul und Bruchspannung nach DIN EN ISO 527-2/1A
Biegeversuch zur Ermittlung von Biegemodul, Biegefestigkeit und Randfaserdehnung nach DIN EN ISO 178
Schlagzähigkeit: IZOD-Methode nach ISO 180/1U bei Raumtemperatur
Schmelzeviskosität: Bestimmt nach DIN 54811 / ISO 11443 bei 280°C und einer Scherrate von 1500s⁻¹ mit dem Gerät Viscorobo 94.00 der Fa. Göttfert nach Trocknung des Granulates bei 80°C für 48 Stunden im Vakuumtrockner.
Fließspirallänge: Zur Ermittlung der Fließfähigkeit wurde auf einer Spritzgussmaschine eine halbrunde 4 x 2 Fließspirale ( x = Multiplikation) gespritzt und der erreichte Fließweg in cm ermittelt. Die Herstellung erfolgte mit einer Massetemperatur von 270°C und einer Werkzeugtemperatur von 80°C. Der angegebene Wert ist der Mittelwert aus fünf Bestimmungen der Fließspirallänge.

**Tabelle 1: Verstärkte PA6-Formmassen**

| | | Vgl. 1 | Bsp. 1 | | Bsp. 2 |
|---|---|---|---|---|---|
| Komponente A1 | [%] | 67,23 | 64,23 | | 61,23 |
| Komponente B1 | [%] | - | 3 | | 6 |
| Komponente C1 | [%] | 30 | 30 | | 30 |
| Komponente F1 | [%] | 2,77 | 2,77 | | 2,77 |
| Schmelzeviskosität (280°C, 1500s⁻¹) | [Pas] | 78 | 69 | | 45 |
| Izod-Schlagzähigkeit (ISO 180 1U, RT) | [kJ/m²] | 53 | 60 | | 70 |
| Zugmodul | [MPa] | 9550 | 9589 | | 9220 |
| Bruchspannung | MPa] | 172 | 160 | | 149 |
| Biegemodul | [Mpa] | 8553 | 8515 | | 8060 |
| Biegefestigkeit | [Mpa] | 262 | 247 | | 230 |
| Randfaserdehnung | [%] | 3,8 | 3,6 | | 3,6 |
| Länge der Fließspirale | [cm] | 64 | 65 | | 75 |

## Patentansprüche

1. Verwendung von Polyalkylenglykolestern mit niedrigem Molekulargewicht der allgemeinen Formel (I)
R-COO-(Z-O)ₙOC-R (I)
worin
R für eine verzweigte oder geradkettige Alkylgruppe mit 1 bis 20 Kohlenstoffatomen steht,
Z für eine verzweigte oder geradkettige C₂ bis C₁₅ Alkylengruppe steht und
n für eine ganze Zahl von 2 bis 20 steht
als Fließverbesserer in thermoplastischen Formmassen auf Basis von Polyamiden

2. Verwendung gemäß Anspruch 1, **dadurch gekennzeichnet, dass** zusätzlich zum Thermoplasten und zum Fließverbesserer die thermoplastischen Formmassen eine oder mehrere Komponenten der Reihe
C) 0,001 bis 70 Gew.-Teile mindestens eines Füll- oder Verstärkungsstoffes,
D) 0,001 bis 65 Gew.-Teile mindestens eines Flammschutzadditivs,
E) 0,001 bis 80 Gew.-Teile mindestens eines Elastomermodifikators,
F) 0,001 bis 10 Gew.-Teile weiterer üblicher Additive
G) 0,5 bis 30 Gew.-Teile Verträglichkeitsvermittler
enthalten.

3. Verwendung gemäß der Ansprüche 1 oder 2, **dadurch gekennzeichnet, dass** in der Formel (I)
R für eine verzweigte oder geradkettige C₁-C₁₅-Alkylgruppe steht,
Z für eine Ethylengruppe (-CH₂-CH₂-) steht und
n für eine ganze Zahl von 2 bis 20 steht.

4. Verwendung gemäß der Ansprüche 1 bis 3, **dadurch gekennzeichnet, dass** in der Formel (I)
R für eine verzweigte oder geradkettige C₁-C₁₅-Alkylgruppe steht,
Z für eine Ethylengruppe (-CH₂-CH₂-) steht und
n für eine ganze Zahl von 2 bis 9 steht.

5. Verwendung gemäß der Ansprüche 1 bis 4, **dadurch gekennzeichnet, dass**
R für CH(C₂H₅)(C₄H₉), Z für eine Ethylengruppe (-CH₂-CH₂-) und n für eine ganze Zahl von 2 bis 9 steht.

## Claims

1. Use of polyalkylene glycol esters with low molecular weight of the general formula (I)
R-COO-(Z-O)ₙOC-R (I)
in which
R is a branched or straight-chain alkyl group having from 1 to 20 carbon atoms,
Z is a branched or straight-chain C₂ to C₁₅ alkylene group, and
n is an integer from 2 to 20,
as flow improver in thermoplastic moulding compositions based on polyamides.

2. Use according to Claim 1, **characterized in that**, in addition to the thermoplastic and to the flow improver, the thermoplastic moulding compositions comprise one or more components from the group of
C) from 0.001 to 70 parts by weight of at least one filler or reinforcing material,
D) from 0.001 to 65 parts by weight of at least one flame retardant additive,
E) from 0.001 to 80 parts by weight of at least one elastomer modifier,
F) from 0.001 to 10 parts by weight of other conventional additives, and
G) from 0.5 to 30 parts by weight of compatabilizer.

3. Use according to Claims 1 and 2, **characterized in that**, in the formula (I),
R is a branched or straight-chain C₁-C₁₅-alkyl group,
Z is an ethylene group (-CH₂-CH₂-), and
n is an integer from 2 to 20.

4. Use according to Claims 1 to 3, **characterized in that**, in the formula (I),
R is a branched or straight-chain C₁-C₁₅-alkyl group,
Z is an ethylene group (-CH₂-CH₂-), and
n is an integer from 2 to 9.

5. Use according to Claims 1 to 4, **characterized in that**
R is CH(C₂H₅)(C₄H₉), Z is an ethylene group (-CH₂-CH₂-) and n is an integer from 2 to 9.

## Revendications

1. Utilisation d'esters de polyalkylèneglycols de faible masse moléculaire, de formule générale (I)
R-COO-(Z-O)ₙOC-R (I)
dans laquelle
R représente un groupe alkyle à chaîne droite ou ramifiée ayant de 1 à 20 atomes de carbone,
Z représente un groupe alkylène en C₂-C₁₅ à chaîne droite ou ramifiée et
n représente un nombre entier valant de 2 à 20
en tant qu'agent améliorant l'écoulement dans des matières à mouler thermoplastiques à base de polyamides.

2. Utilisation selon la revendication 1, **caractérisée en ce qu'**en plus de la matière thermoplastique et de l'agent améliorant l'écoulement les matières à mouler thermoplastiques contiennent un ou plusieurs composants de la série
C) 0,001 à 70 parties en poids d'au moins une matière de charge ou de renfort,
D) 0,001 à 65 parties en poids d'au moins un additif ignifuge,
E) 0,001 à 80 parties en poids d'au moins un modificateur d'élastomère,
F) 0,001 à 10 parties en poids d'autres additifs usuels,
G) 0,5 à 30 parties en poids de promoteur de compatibilité.

3. Utilisation selon la revendication 1 ou 2, **caractérisée en ce que** dans la formule (I)
R représente un groupe alkyle en C₁-C₁₅ à chaîne droite ou ramifiée,
Z représente un groupe éthylène (-CH₂-CH₂-) et
n représente un nombre entier valant de 2 à 20.

4. Utilisation selon les revendications 1 à 3, **caractérisée en ce que** dans la formule (I)
R représente un groupe alkyle en C₁-C₁₅ à chaîne droite ou ramifiée,
Z représente un groupe éthylène (-CH₂-CH₂-) et
n représente un nombre entier valant de 2 à 9.

5. Utilisation selon les revendications 1 à 4, **caractérisée en ce que**
R représente CH(C₂H₅) (C₄H₉), Z représente un groupe éthylène (-CH₂-CH₂)- et n représente un nombre entier valant de 2 à 9.
